# EUROPEAN PATENT APPLICATION

(11) **EP 4 124 601 A1**
(43) Date of publication of application: **01.02.2023**
(21) Application number: 21188921.7
(22) Date of filing: 30.07.2021
(51) Int. Cl.: C01C 1/04, C01B 21/38, C01C 1/18, C25B 1/04, C01B 21/40, C01B 21/26

(54) **INTEGRATED PROCESS FOR THE SYNTHESIS OF AMMONIA AND NITRIC ACID**

(71) Applicant: CASALE SA, 6900 Lugano (CH)
(72) Inventor: MASANTI, Matteo, 22010 Musso (CO) (IT); CORBETTA, Michele, 22100 Como (IT); OSTUNI, Raffaele, 6900 Lugano (CH); BIALKOWSKI, Michal Tadeusz, 5417 Untersiggenthal (CH); OLDANI, Fabio, 21050 Cantello (VA) (IT)
(74) Representative: M. Zardi & Co S.A.

(57) **Abstract**

An integrated process for the synthesis of ammonia and nitric acid, including the production of hydrogen from electrolysis of water, is controlled by a selective switching between a first mode of operation and a second mode of operation, wherein in the first mode of operation ammonia is produced in excess and is stored in a suitable ammonia storage; in the second mode of operation the ammonia from said ammonia storage is used to provide an additional input of ammonia to the production of nitric acid; the switching between said first mode and second mode is based on the amount of power which is transferred to the electrolysis of water.

## Description

### Field of application

The invention relates to the field of ammonia and nitric acid production. In particular the invention relates to a method for controlling an integrated process for production of ammonia and nitric acid and to a process or plant which implements said method.

### Prior art

The conventional production of ammonia involves the reforming of a hydrocarbon feedstock to produce a hydrogen-containing syngas, the purification of the syngas involving water-gas shift conversion, removal of carbon dioxide and optionally methanation, and finally the conversion to ammonia in a suitable catalytic converter. The make-up gas for the synthesis of ammonia contains also nitrogen which may be introduced with combustion air, e.g. in a secondary reformer, or produced in a suitable air separation unit. Hence the synthesis of ammonia may also involve the production of nitrogen.

The synthesis of ammonia is performed at a high pressure. The compression of the ammonia make-up gas to the ammonia synthesis pressure represents a major energy input of the process. Heat is normally recovered from the process, e.g. from the hot reforming effluent and from the ammonia converter, in the form of steam. Steam at a sufficient pressure may be expanded in a steam turbine to produce energy. Therefore, the steam may be used internally in the process to satisfy, at least in part, the heat and/or energy input of the process.

An environmental issue connected with the production of ammonia is that heat for reforming of the hydrocarbon feedstock is conventionally provided by the combustion of a fossil fuel (e.g. natural gas) producing a considerable emission of carbon dioxide into the atmosphere.

According to an emerging trend, it is desirable to provide an ammonia process with a reduced carbon footprint at an acceptable cost. Ammonia produced with a reduced carbon footprint, particularly with a reduced emission of carbon dioxide, is termed low-carbon ammonia. A plant configured to produce ammonia with reduced emissions is termed low-carbon ammonia plant.

A known technique for the production of low-carbon ammonia includes the production of hydrogen from electrolysis of water powered by a renewable energy source (e.g. solar energy or wind energy). Using this technique, part or all of the hydrogen needed for the ammonia synthesis may come from renewable energy. When the full amount of hydrogen comes from renewable energy, the so obtained low-carbon ammonia is commonly called green ammonia.

A drawback of using renewable energy is represented by the availability of the energy source. The sources of renewable energy, such as solar energy, are typically subject to fluctuations which inevitably propagate to the entire process.

A process for the production of ammonia and nitric acid involves several turbomachines such as turbines and compressors, that are not intrinsically flexible: as a consequence, the entire process is not flexible and should be operated near to design conditions.

Particularly, the amount of steam and the amount of power that can be internally produced is affected by fluctuations in the production of hydrogen. Steam turbines are normally designed to operate close to a nominal steam flow. When the steam flow drops, the turbine may suffer a dramatic reduction of efficiency or may be unable to operate. If the internal production of energy falls, the process may need an external energy input, which represents an additional cost.

A current solution to the above drawbacks is the installation of a hydrogen storage to act as buffer and to provide a steady H2 flow rate to the synthesis loop and/or batteries or other means of energy storage to provide a steady flow of energy to the water electrolysis and other electricity consumers in the plant. However, these solutions are not fully satisfactory due to the capital cost of hydrogen and energy storage means.

The above drawbacks are particularly felt when the production of ammonia is integrated with the production of nitric acid and possibly of ammonium nitrate. In such an integrated plant, a fluctuation of the energy source for the production of hydrogen affects the production of ammonia and the subsequent production of nitric acid and ammonium nitrate.

Therefore, in light of the consideration state above is highly desirable to provide more flexibility to the integrated production of ammonia and nitric acid in order to maintain efficiency and the profitability even if the hydrogen production is powered by a fluctuating or intermittent power source.

### Summary of the invention

The invention addresses the problem of how to provide a flexible, adaptive control of an integrated ammonia-nitric acid process wherein at least part of the hydrogen for the synthesis of ammonia is produced by water electrolysis and, consequently, the process is subject to the availability of the power source used for the electrolysis process. Particularly, the invention addresses the problem of how to follow fluctuations of said power source, which is typically the case of renewable energy sources such as solar energy.

The problem is solved with a method for controlling an integrated process for the synthesis of ammonia and nitric acid in accordance with claim 1.

The method is applied to a process wherein hydrogen is produced from electrolysis of water and used to produce an ammonia make-up gas; said make-up gas is reacted to form ammonia; at least part of said ammonia is used to produce nitric acid. In some embodiments the method is applied to a process wherein ammonium nitrate is also produced.

The term of ammonia make-up gas denotes a gas containing hydrogen and nitrogen in a suitable amount for the synthesis of ammonia. Typically said gas has a hydrogen to nitrogen molar ratio of 3 or just around 3.

The method includes a selective switching of the process between a first mode of operation and a second mode of operation, wherein:
in the first mode of operation, the production of ammonia and the production of nitric acid are regulated in such a way that: the process has a first output of nitric acid; ammonia is produced in excess compared to the ammonia required for the production of said first output of nitric acid; the excess of ammonia is stored in a suitable ammonia storage;
in the second mode of operation, the production of ammonia and the production of nitric acid are regulated in such a way that: the process has a second output of nitric acid; the produced ammonia is less than the ammonia required for the production of said second output of nitric acid, so that the production of nitric acid requires an additional input of ammonia, and ammonia from said ammonia storage is used to provide said additional input.

The method includes switching between said first mode and second mode based on the amount of power which is transferred to the electrolysis of water.

Hence the method allows adaptation of the process to the amount of power available to the water electrolysis process. The amount of power transferred to the electrolysis of water may vary due to the cost and/or due to the actual availability of the source. As a general rule, the first mode of operation is selected when more power is available and the second mode of operation is selected when less or no power is available.

As above said, the choice of the mode of operation may follow cost and/or availability of the source. For example, in case electric power is taken from a grid, the first mode may be selected when the price of the energy is low whilst the second mode may be selected when the price is high.

A particular interesting embodiment of the invention concerns the case of water electrolysis powered by renewable energy. In that case, the first mode can be selected when the source of the renewable energy is available and is able to produce a substantial power; the second mode can be selected when the source is not available or is available only to a limited extent, so that no or little power can be transferred to the water electrolysis process.

For example when the renewable energy is solar energy, the first mode can be selected in daytime and the second mode can be selected during night time or, more generally, when solar energy is substantially unavailable e.g. due to cloud cover.

The invention starts from the finding that the production of ammonia, when dependent on electric energy, and more particularly on a renewable energy, for the production of hydrogen, may suffer a lack of input power according to cost and/or availability of the source. The invention compensates for this lack of input power by storing ammonia when the source is fully available, to be used when the source is scarce or not available. Accordingly the invention allows a constant or nearly constant production of nitric acid despite a fluctuation or intermittent availability of the source.

According to certain embodiments of the invention, the above lack of input power may also be compensated by transferring a proportionally larger amount of thermal power and/or electric power from the nitric acid production process to the ammonia synthesis process. When provided, also a tied-in ammonium nitrate production process may export thermal power and/or electric power to the ammonia synthesis process.

The invention opens new possibilities for the production of low-carbon ammonia or green ammonia, in combination with the production of nitric acid and optionally of ammonium nitrate. Particularly the invention provides a more flexible process adapted to follow the fluctuations of renewable energy-based production of hydrogen.

Other advantages of the present invention include a reduction in the synthesis cost of green ammonia, a reduction in the backup power required to power the water electrolysis and the compression units and a reduction in the size of the hydrogen storage units.

Further aspects of the invention include a process and a plant according to the claims.

The invention may be applied to a process where the production of hydrogen is fully made by electrolysis of water, or to a hybrid process wherein hydrogen is partly produced from reforming of a fossil fuel and partly from electrolysis of water.

### Detailed description of the invention

The production of ammonia is performed in an ammonia plant and the production of nitric acid is performed in a nitric acid plant connected to the ammonia plant. Said ammonia plant and nitric acid plant may also be regarded as sections of an integrated plant.

The production of ammonia includes the generation of hydrogen, which according to the invention is performed at least partially in a water electrolyzer. The production of may further include the generation of nitrogen in a suitable nitrogen generation unit, e.g. an air separation unit, if required to reach the correct hydrogen/nitrogen ratio in the ammonia make-up gas.

The production of nitric acid involves the catalytic oxidation of ammonia to obtain a process gas containing nitric oxides, which is contacted with water in a suitable absorption column to produce nitric acid.

The invention provides that the load of said ammonia plant and nitric acid plant is regulated according to the power available for the water electrolysis process. Particularly, in the first mode of operation the load of the nitric acid plant is reduced, to allow ammonia storage; in the second mode of operation the load of the ammonia plant is reduced depending on the reduced amount of power available for water electrolysis. Hence the invention adopts a swinging control wherein the load of the ammonia plant substantially follows the availability of the renewable energy source, whilst the load of the nitric acid plant is complementary to the load of the ammonia plant.

The first mode of operation may be selected when the power available for electrolysis is above a first threshold value and the second mode of operation may be selected when said power falls below a second threshold value. The first threshold value and the second threshold value may be the same or different. Preferably, said threshold values are equal to or around 50% of the total power consumption of the ammonia plant including water electrolysis.

The ammonia plant has a nominal ammonia output and the nitric acid plant has a nominal nitric acid output, said nominal nitric acid output corresponding to said nominal ammonia output bring partially or entirely transferred from the ammonia plant to the nitric acid plant for the production of nitric acid.

Preferably, in the first mode of operation the ammonia plant is operated at 80% or more of said nominal ammonia output and the nitric acid plant is operated at 50% to 80% of said nominal nitric acid output. The condition of 80% or more may include up to 100% or more than 100% if the plant is able to operate above the nominal capacity, for example 80% to 110%.

In the second mode of operation the ammonia plant may be operated at 1 % to 30% of said nominal ammonia output, preferably 10% to 30% or 20% to 30%; the nitric acid plant may be operated at 80% or more of the nominal capacity.

The nitric acid production process is generally a net exporter of energy, in the form of heat and/or electric energy. Electric energy can be produced, in a nitric acid plant, by expanding the tail gas of the absorption column and/or by expanding steam produced from heat released in the ammonia oxidation. Heat can be exported in the form of steam under pressure, produced e.g. by removing heat from the catalytic oxidation of ammonia and cooling of various process streams

Accordingly a thermal power and/or electric power can be transferred from the nitric acid production process to the ammonia synthesis process. Here, a transfer from a first process to a second process means that one or more items of the plant performing the first process produce power which is transferred to one or more items of the plant performing the second process.

Preferred uses of electric power exported to a tied-in ammonia plant include: electrolysis of water, generation of nitrogen, compression of the ammonia make-up gas. Preferably said power is used predominantly for the compression of the ammonia make-up gas.

In an embodiment of the invention, the transfer of thermal power and/or electric power from the nitric acid production process to the ammonia synthesis process is also controlled according to the mode of operation. Particularly, the power transferred to the ammonia synthesis process can be proportionally greater in the second mode of operation. Specifically, in an embodiment of the invention, a ratio of power imported from the nitric acid production process over total input power is greater in the second mode of operation than in the first mode of operation.

Heat is normally exported by means of hot steam. Heat (hot steam) exported by the nitric acid plant can be used, for example, to heat the ammonia synthesis reactor, e.g. providing a suitable heat exchanger inside the reactor, to maintain the reactor at a proper temperature even if running at partial load.

Advantages of the energy transfer from the nitric acid plant to the ammonia plant include to avoid or reduce the need of providing a hydrogen storage and/or of importing electricity from the grid. A noticeable advantage is that the ammonia plant may run in "island" condition, i.e. with its input of electric energy fully produced internally in the integrated plant, namely in the nitric acid plant.

The electrolysis of water uses preferably a renewable energy. According to various embodiments, all or some of the hydrogen in the ammonia make-up gas may be produced from renewable energy. In that case, the method includes switching between said first mode and second mode based on the amount of power made available by the source(s) of renewable energy used in the electrolysis process. An embodiment of particular interest is the production of hydrogen from solar-powered electrolysis.

During the second mode of operation, part of the ammonia withdrawn from the ammonia storage may be combusted to provide an additional source of energy in the form of heat and/or electric energy. This use of the stored ammonia may provide a further means for compensation of the energy shortage of the ammonia synthesis process.

The method of the invention may be applied to a process which further includes the production of ammonium nitrate from at least part of the produced ammonia and nitric acid. The method includes, preferably, that in the first mode of operation the ammonium nitrate production process is operated at a reduced output. As a general rule, the ammonium nitrate production process is governed in a manner similar to that of the nitric acid production process. More preferably in the first mode of operation the ammonium nitrate production process may be operated at 50% to 80% of its nominal output, and in the second mode of operation the ammonium nitrate production process is operated at 80% or more of its nominal output.

Also the ammonium nitrate production process is typically a net exporter of energy in the form of heat and/or electricity. Hence the thermal or electric power exported from the ammonium nitrate production process may be used in the ammonia synthesis process, particularly in the second mode of operation. The ammonium nitrate process is preferably operated in switching mode at the similar loads of the nitric acid. A related advantage is that steam/energy from the ammonium nitrate can be transferred to the ammonia during the mode of operation of ammonia at low load.

Still another preferred feature of the invention is to manage the mode of operation of the integrated process in order to maintain a constant or near constant production of steam. The ammonia production process and the nitric acid production process includes various steps where heat is removed from process streams and typically used to produce steam. Said steam is used internally for process steps that require a heat input, such as preheating or process streams, or expanded to produce energy for equipment such as compressors and other machines. A constant or near constant generation of steam helps maintain a stable process and reduces the need to import energy.

Accordingly, an embodiment of the invention provides that:
a first amount of steam is produced from heat removed from the ammonia production process and a second amount of steam is produced from heat removed from the nitric acid production process;
the switching between the first mode of operation and the second mode of operation is controlled to maintain a total amount of steam, which is the sum of the first amount of steam and second amount of steam, within a desired range.

Preferably the process is controlled so that said total amount of steam differs by no more than 30% and more preferably no more than 20% between the first mode of operation and the second mode of operation.

The mechanical and/or electrical energy obtained from expansion of steam may be used internally in the process to power at least one of the following steps: generation of hydrogen from water electrolysis, generation of nitrogen from air, compression of ammonia make-up gas to ammonia synthesis pressure, compression of ammonia in the ammonia refrigeration section, compression of process air in the nitric acid process, compression of NOx-containing gas in the nitric acid process.

A steam flow that is expanded in a steam turbine to recover mechanical and/or electrical energy is a medium pressure steam, preferably the working pressure of said steam is comprised between the 20 to 100 bar, more preferably between 25 to 60 bar.

In an embodiment, an integrated plant for the synthesis of ammonia and nitric acid may comprise a common steam network between the nitric acid plant and the ammonia plant.

The complementary switching operation between the first operation mode and the second operational mode results in a nearly stable generation of steam from the integrated plant because when the steam generated from the ammonia plant is within the low range, the steam generated from the nitric acid plant is within the high range and vice-versa. Accordingly, the efficiency of the integrated plant is maintained as well during fluctuation in the provision of renewable energy sources.

The invention therefore may combine the steam integration concept with the insight of switching operation between alternative modes to overcome the drawbacks caused by the fluctuation in the availability of renewable power.

The switching policy between the operating loads of the ammonia and nitric acid plant can be easily understood considering the scenario wherein the renewable energy sources are for instance provided with solar energy. Typically, during the day there is large availability of solar energy while during the night there is low to none availability thus resulting in a day to night cyclical availability of renewable power. Therefore, to best exploit the availability of renewable power, the ammonia synthesis loop is operated at maximum capacity or close to it during the day while during night it is operated at reduced capacity.

Further preferred features and preferred embodiments of the invention are as follows.

In addition to hydrogen, oxygen may be generated from the water electrolysis step and used as oxidant stream for the catalytic oxidation of ammonia performed in the nitric acid production process. Preferably, the integrated process for the synthesis of ammonia and nitric acid comprises the steps of subjecting the nitric acid solution to a stripping step, and supplying a portion of the oxygen obtained from the water electrolysis step to said stripping step. Preferably the stripping step is carried out in a bleaching column.

According to an embodiment of the invention, an oxygen stream is extracted from air in a nitrogen generation step and at least a portion of said oxygen is supplied to the stripping step and/or to the catalytic oxidation of ammonia. The catalytic oxidation of ammonia is preferably carried out in a burner.

When the oxygen obtained from the water electrolysis and/or the oxygen obtained from a nitrogen generation unit are supplied to said ammonia burner, the amount of air necessary for the oxidation of ammonia and supplied to the burner can be reduced. Advantageously, the amount of power required by the air compressor of the nitric acid plant is reduced and the compression power saved can be advantageously exported from the nitric acid plant to the ammonia plant so that the ammonia production can be stabilized to a higher load.

When the oxygen extracted from the water electrolysis and/or from a nitrogen generation unit is supplied to the stripping unit (bleacher column) of the nitric acid plant, the amount of secondary air added to the bleacher can be reduced and the compression power saved can be advantageously exported from the nitric acid plant to the ammonia plant so to minimize the electricity import requirement.

Preferably, the oxygen generated from the water electrolysis step and/or the oxygen extracted from a nitrogen generation step is/are supplied to the cooling step of the ammonia combusted gas and/or to the absorption step.

When oxygen is supplied to the cooling step or to the absorption step, the oxidation of the NOx-containing gas in the cooling train or in the absorber is enhanced as a result the productivity of nitric acid is increased at parity of operating conditions of the absorption column. Alternatively, at parity of nitric acid produced, the absorption step can be carried out at lower pressure so that less compression power is required.

The statements above indicate that oxygen addition from the electrolysis to the nitric acid is beneficial. When the integrated plant produces ammonium nitrate as one of the final products, there is a further advantage in that more ammonia is produced than the amount of ammonia consumed for the nitric acid, about double. As a consequence, the amount of oxygen co-produced by the water electrolysis is higher, and when supplied to the nitric acid production it is almost sufficient to cover all the oxidant required for the oxidation of ammonia to NO, and further oxidation of NO to NO2 for production of nitric acid. A related advantage is less air needs to be added to the nitric acid production. Another related advantage is more oxygen is available to be added to the nitric acid production at any or more of the steps indicated above.

The integrated process may further comprise the steps of recovery of nitrogen from the tail gas and supply said nitrogen to the catalytic conversion of the make-up gas into ammonia. Advantageously, the net power consumption of the ammonia plant, at a specific load, is reduced.

According to an embodiment of the present invention, a portion of the ammonia obtained from the catalytic conversion of the make-up gas is subjected to a combustion step followed by an expansion step to recover mechanical and/or electrical energy to be used in the integrated ammonia-nitric acid process. The energy recovered from such combustion of ammonia may be used to provide mechanical and/or electric power to the ammonia plant when there is low availability of renewable energy sources. Advantageously, the net import of electricity from the electrical grid or from the backup batteries is reduced.

The invention is applicable also to a hybrid process wherein part of hydrogen is produced from renewable energy sources via water electrolysis whilst part of the hydrogen is produced from fossil fuel for example from reforming.

The invention can also be applied to revamp co-located ammonia and nitric acid plants to increase the production capacity of ammonia and nitric acid. The revamping method may comprise the introduction of a water electrolyzer in the ammonia plant to synthesize hydrogen. The added water electrolyzer may replace, or operate in parallel to, an existing reforming section for the production of hydrogen.

### Description of the figures

Fig. 1 shows a simplified block scheme of an integrated plant for the production of ammonia, nitric acid and ammonium nitrate.
Figs. 2-4 show variants of the scheme of Fig. 1.
Fig. 5 is a plot showing the typical availability of a solar energy source.
Fig. 6 illustrates the load of an ammonia synthesis process and nitric acid production process powered by a solar energy source with the availability of Fig. 5 and using the method of the invention.
Fig. 7 illustrates another example of variable load in the presence of a fluctuating source of energy.

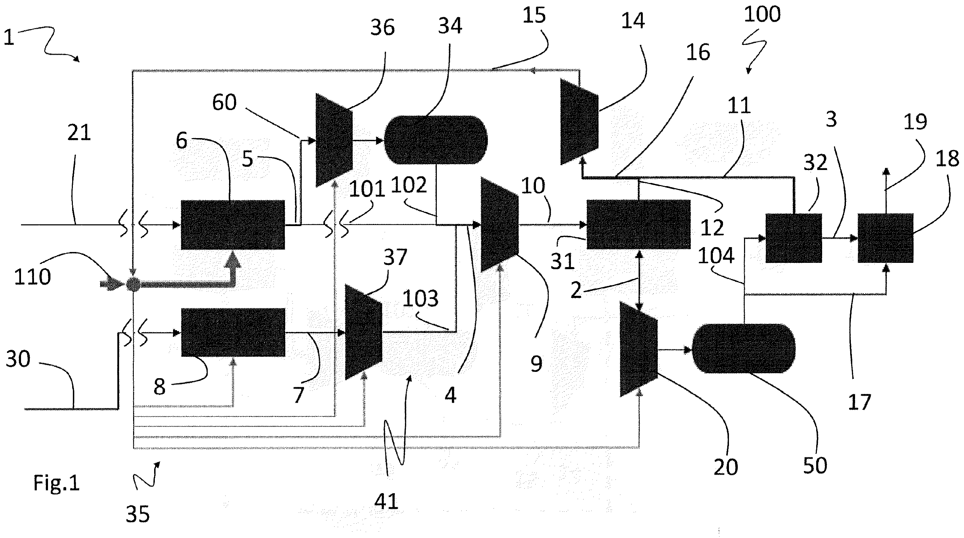

Fig. 1 shows a simplified block scheme of an integrated plant 1 for the synthesis of ammonia 2, nitric acid 3 and ammonium nitrate 19.

The plant 1 comprises an ammonia synthesis section 41, a nitric acid synthesis section 32 and an ammonium nitrates synthesis section 18.

The ammonia synthesis section 31 includes a water electrolyzer 6 for the generation of hydrogen 5 from water 21, a nitrogen generation unit 8 for the extraction of nitrogen 7 from air 30, a plurality of compression units 36, 37 and 9 to bring the operative pressure of hydrogen and nitrogen to synthesis conditions and an ammonia catalytic converter 31 to synthesize ammonia 2.

The water electrolyzer 6 is powered with electrical energy 110 obtained from renewable energy sources and from the electrical energy 15 recovered from the integrated plant 1. The latter electrical energy is recovered from the integrated plant by expanding the steam flow 16 in a steam turbine 14 coupled to an electrical generator (turboexpander). Additional electrical energy inputs may be supplied to the water electrolyzer from external sources.

The ammonia synthesis section 41 further includes a hydrogen storage unit 34 and an ammonia storage unit 50 configured to accumulated hydrogen 5 and ammonia 2 during the first mode of operation. A compression unit 20 is in communicating with the ammonia catalytic converter 31 and with the ammonia storage unit 50.

The nitric acid synthesis section 32 includes a burner (not showed) to catalytic oxidize NH3 to yield a gas containing NO2, a cooling train (heat exchanger section) to bring the temperature of the NO2 gas to absorption conditions, a washing column (not showed) to react water with NO2 to produce nitric acid 3 and a tail gas containing N2O, residual NOx, oxygen and N2.

The integrated plant 1 further comprises a steam network 100 designed to recover a first steam 12 from the ammonia catalytic converter 31 and a second steam 11 from the nitric acid synthesis section 32. The steam network 100 is fluid communication with a steam turbine 14 coupled to an electrical generator to convert mechanical energy into electrical energy, the steam turbine 14 is communication with an electrical distribution grid 35 deemed to bring electrical energy 15 to the nitrogen generation unit 8, to the compression units 36, 37, 9 and 20 and to the water electrolyzer 6.

In some embodiment one or more compressors may be directly coupled to a steam turbine.

Water 21 is converted into hydrogen 5 and oxygen (not showed) in the water electrolyzer 6, a first portion of hydrogen 60 extracted from the water electrolyzer 6 is passed through the compressor 36 and fed to the hydrogen storage unit 34.

A second portion of hydrogen 101 extracted from the water electrolyzer is mixed with the first portion of hydrogen 102 that leaves the hydrogen storage unit 34 and with a nitrogen stream 103 to yield a make-up gas 4.

Nitrogen 7 and optionally oxygen 25 are extracted from air 30 in the N2 generator 8. Nitrogen 7 is fed to the compressor 37 before being mixed with the hydrogen streams 101 and 102 to yield the make-up gas 4.

The make-up gas 4 is fed to the syngas compressor 9 to yield a ready for conversion make-up gas 10 that is subsequentially fed to the ammonia converter 31 to yield ammonia 2. A first steam 12 is recovered from the ammonia converter 32.

Ammonia 2 is fed to NH3 feed pump 20 before being stored in the ammonia storage unit 50. A first portion of the ammonia 104 is fed to the nitric acid synthesis section 32 to yield nitric acid 3 whilst a second portion 17 of ammonia is fed to the ammonium nitrate synthesis section 18 together with nitric acid 3.

Output of the ammonium nitrate synthesis section 18 is an ammonium nitrate stream 19.

A second steam 11 is recovered from the nitric acid synthesis section 32 in a steam recovery section (not showed) configured to recover steam from the ammonia burner and from the cooling train (heat exchanger section). The first steam 11 is combined with the second steam 12 to yield a steam flow 16 that is subsequentially supplied to the steam turbine 14 to generated electrical and/or mechanical energy 15.

The electrical energy 15 is transferred via the electrical distribution grid 35 to the water electrolyzer 6, to the nitrogen generation unit 8 and to the compression units 36, 37, 9 and 20.

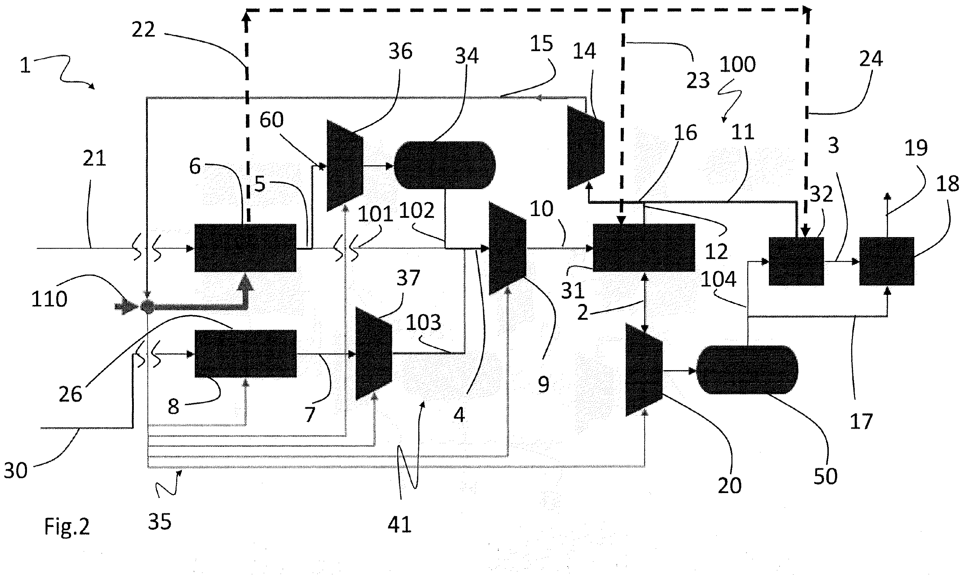

Figs. 2-4 illustrate variants of the scheme of Fig. 1. Said variants may also be combined into further embodiments of the invention.

Fig. 2 illustrates an embodiment wherein oxygen 22 extracted from the water electrolyzer 6 is partially supplied to the ammonia converter via line 23 and to the nitric acid synthesis section via line 24.

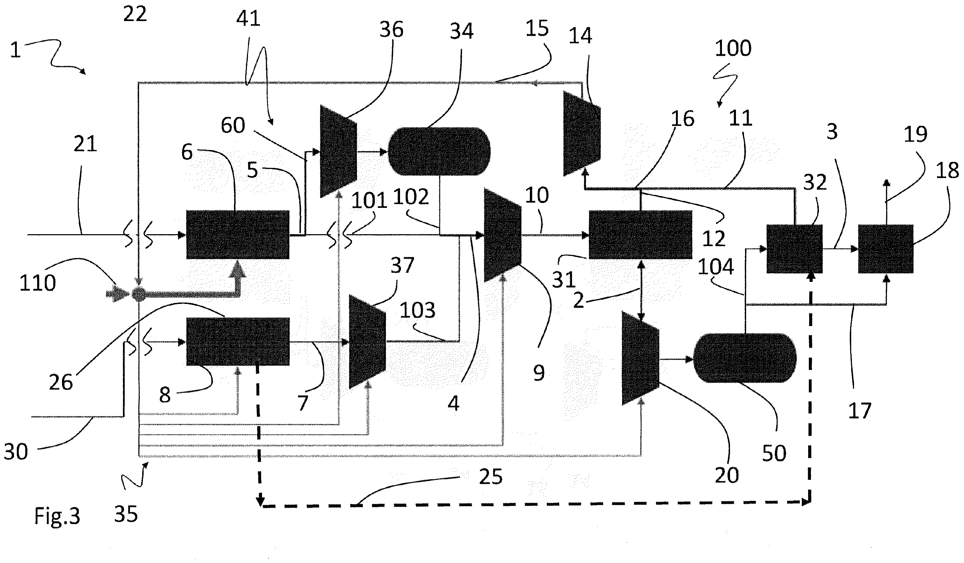

Fig. 3 illustrates an embodiment wherein the oxygen 25 extracted from the nitrogen generator 8 is supplied to nitric acid synthesis section 32.

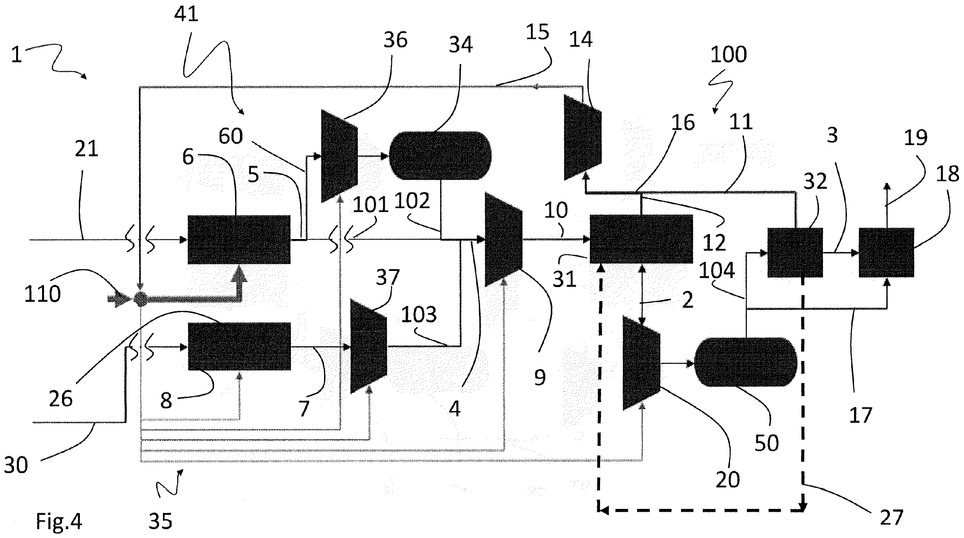

Fig. 4 illustrates an embodiment wherein nitrogen 27 extracted from the nitric acid synthesis section 32 is recycled to the ammonia converter 31. The nitrogen is recovered from the tail gas exiting the absorption column.

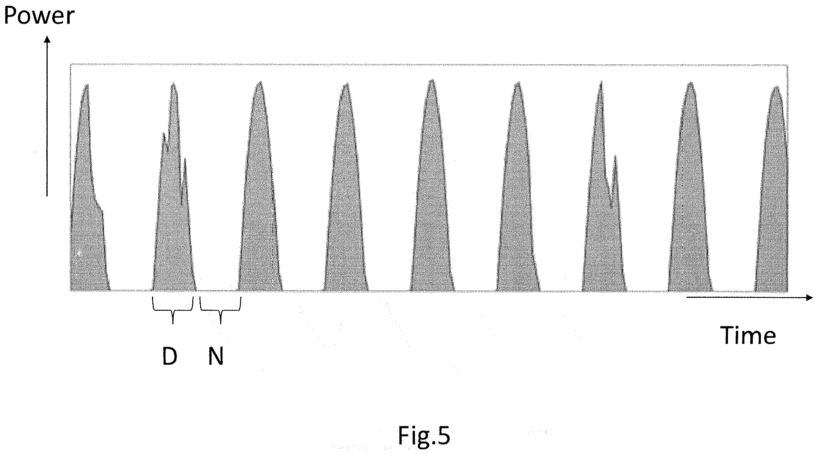

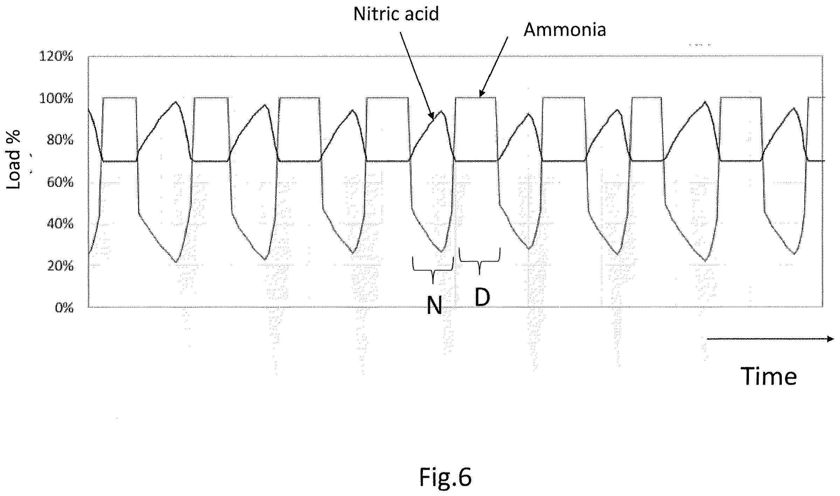

It can be understood that the output of the plant 1 depends mainly on the input power 110. Fig. 5 and Fig. 6 provide an example of controlling the plant 1, in accordance with an embodiment of the invention, based on the availability of said power 110.

Fig. 5 illustrates a typical availability of said power input 110 when provided by a solar energy source, for example a photovoltaic (PV) field. Fig. 5 illustrates a typical daily cycle including first periods D (day) when the source is available and second periods N (night) when the source is unavailable.

Fig. 6 illustrates a corresponding operation of the plant 1. According to the swinging load policy, the load of the ammonia section is proportional to the renewable power generation, reaching the full capacity during the day periods D (>70%) and the minimum load during the night periods N (<50%). The nitric acid section is operated around 70% load during the day and around 100% during the night.

Clearly the policy illustrated in Fig. 6 can be applied to other sources having an output profile similar to that of Fig. 5.

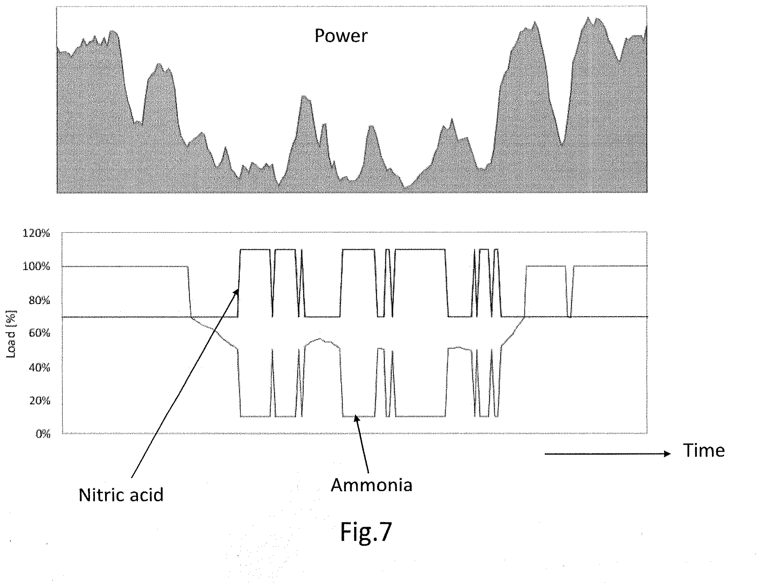

Fig. 7 illustrates another example when the source of power 110 has a more complex profile with sharp fluctuations which can be found e.g. when the power 110 comes from wind turbines. According to the policy of the invention, the load of ammonia plant is high when the available power is also high, and is reduced when the available power is low or minimum. The load of the nitric acid plant is complementary to the load of the ammonia plant.

## Claims

1. Method for controlling an integrated process for the synthesis of ammonia and nitric acid, wherein:
in the process, hydrogen is produced from electrolysis of water and used to produce an ammonia make-up gas; said make-up gas is reacted to form ammonia; at least part of said ammonia is used to produce nitric acid;
the method includes a selective switching of the process between a first mode of operation and a second mode of operation;
in the first mode of operation, the production of ammonia and the production of nitric acid are regulated in such a way that: the process has a first output of nitric acid; ammonia is produced in excess compared to the ammonia required for the production of said first output of nitric acid; the excess of ammonia is stored in a suitable ammonia storage;
in the second mode of operation, the production of ammonia and the production of nitric acid are regulated in such a way that: the process has a second output of nitric acid; the produced ammonia is less than the ammonia required for the production of said second output of nitric acid, so that the production of nitric acid requires an additional input of ammonia, and ammonia from said ammonia storage is used to provide said additional input;
the electrolysis of water is powered by at least one power source and the method includes switching between said first mode and second mode based on the amount of power which is transferred from said at least one power source to the electrolysis of water.

2. Method according to claim 1 wherein:
energy in the form of heat and/or electric energy is exported from the nitric acid production process to the ammonia synthesis process, so that the ammonia synthesis process has a thermal and/or electric power input represented by power imported from the nitric acid production process;
in the ammonia synthesis process, a ratio of the power imported from the nitric acid production process over total power input is greater in the second mode of operation than in the first mode of operation.

3. Method according to claim 2 wherein said power imported from the nitric acid production process is used, in the second mode of operation, for compression of the ammonia make-up gas to ammonia synthesis pressure.

4. Method according to any of the previous claims wherein in the first mode of operation hydrogen is produced in excess compared to the hydrogen required for the production of the make-up gas, said excess of hydrogen is stored in a suitable hydrogen storage unit and the excess of hydrogen accumulated during said first operation mode is used for production of ammonia make-up gas during the second mode of operation.

5. Method according to any of the previous claims wherein said at least one power source of the electrolysis of water includes at least one source of renewable energy and the method includes switching between said first mode and second mode based on the amount of power made available by said source of renewable energy.

6. Method according to claim 5 wherein the first mode of operation is selected when the power made available by said at least one source of renewable energy is above a first threshold value and the second mode of operation is selected when the power made available by said at least one power source of renewable energy falls below a second threshold value.

7. Method according to claim 5 or 6 wherein said renewable energy is solar energy.

8. Method according to any of the previous claims wherein:
the production of ammonia is performed in an ammonia plant and the production of nitric acid is performed in a nitric acid plant connected to the ammonia plant;
the ammonia plant has a nominal ammonia output and the nitric acid plant has a nominal nitric acid output, said nominal nitric acid output corresponding to said nominal ammonia output bring partially or entirely transferred from the ammonia plant to the nitric acid plant for the production of nitric acid;
in the first mode of operation the nitric acid plant is run at a partial load having a nitric acid output less than its nominal output, and in the second mode of operation the ammonia plant is run at a partial load having an ammonia output less than its nominal output.

9. Method according to claim 8 wherein in the first mode of operation the ammonia plant is operated at 80% or more of said nominal ammonia output and the nitric acid plant is operated at 50% to 80% of said nominal nitric acid output.

10. Method according to claim 8 or 9 wherein in the second mode of operation the ammonia plant is operated at 1% to 30% of said nominal ammonia output, preferably 10% to 30% and the nitric acid plant is operated preferably at 80% or more of said nominal nitric acid output.

11. Method according to any of the previous claims wherein, during the second mode of operation, part of the ammonia withdrawn from the ammonia storage is combusted to provide an additional source of energy in the form of heat and/or electric energy,

12. Method according to any of the previous claims, wherein the integrated process further includes the production of ammonium nitrate from at least part of the produced ammonia and nitric acid, the method including that in the first mode of operation the ammonium nitrate production process is operated at a reduced output.

13. Method according to claim 12 wherein in the first mode of operation the ammonium nitrate production process is operated at 50% to 80% of its nominal output, and in the second mode of operation the ammonium nitrate production process is operated at 80% or more of its nominal output.

14. Method according to claim 12 or 13 wherein energy is exported from the ammonium nitrate production process to the ammonia synthesis process in the form of heat and/or electric energy, so that the ammonia synthesis process has a thermal and/or electric power input from the ammonium nitrate production process.

15. Method according to any of the previous claims wherein:
a first amount of steam (12) is produced from heat removed from the ammonia production process and a second amount of steam (11) is produced from heat removed from the nitric acid production process;
the switching between the first mode of operation and the second mode of operation is controlled to maintain a total amount of steam, which is the sum of the first amount of steam and second amount of steam, within a desired range, preferably so that said total amount of steam differs by no more than 30% and more preferably no more than 20% between the first mode of operation and the second mode of operation.

16. A process for the production of ammonia and nitric acid, wherein hydrogen is produced from electrolysis of water and used to produce an ammonia make-up gas; said make-up gas is reacted to form ammonia; at least part of said ammonia is used to produce nitric acid, wherein said process is controlled with a method according to any of claims 1 to 15.

17. A process according to claim 16, further including the production of ammonium nitrate from that at least part of the produced ammonia and nitric acid.

18. A process according to claim 16 or 17 comprising the steps of generating oxygen (22) from the water electrolysis (6) and supplying of at least a portion (23) of said oxygen to the catalytic conversion (31) of ammonia and/or to a stripping step of a nitric acid solution.

19. Integrated plant for the synthesis of ammonia and nitric acid comprising an ammonia synthesis section (41) and a nitric acid synthesis section (32), wherein ammonia produced in the ammonia synthesis section is used to produce nitric acid in the nitric acid synthesis section, wherein:
the ammonia synthesis section includes a front-end section configured to produce a hydrogen-containing ammonia make-up gas, said front-end section including a water electrolyser arranged to produce, by water electrolysis, at least part of the hydrogen (5) contained in the ammonia make-up gas;
the plant further includes a control system configured to control the production of ammonia and nitric acid in the plant according to the method of any of claims 1 to 15.

20. A plant according to claim 19, including a common steam network, which is in common between the ammonia synthesis section and the nitric acid synthesis section, wherein the production of ammonia and nitric acid is controlled to maintain a stable or nearly stable generation of steam.
